# EUROPEAN PATENT APPLICATION

(11) **EP 4 021 112 A1**
(43) Date of publication of application: **29.06.2022**
(21) Application number: 20855118.4
(22) Date of filing: 21.08.2020
(51) Int. Cl.: H04W 72/04

(54) **PUCCH TRANSMISSION METHOD, TERMINAL DEVICE AND NETWORK DEVICE**

(30) Priority: 22.08.2019 CN 201910780288
(71) Applicant: Vivo Mobile Communication Co., Ltd., Dongguan, Guangdong 523863 (CN)
(72) Inventor: LI, Na, Dongguan, Guangdong 523863 (CN); PAN, Xueming, Dongguan, Guangdong 523863 (CN)
(74) Representative: Winter, Brandl - Partnerschaft mbB
(86) International application number: PCT/CN2020/110601
(87) International publication number: WO 2021/032203

(57) **Abstract**

The present disclosure discloses a physical uplink control channel (PUCCH) transmission method, a user equipment (UE), and a network device. The PUCCH transmission method includes: determining a target uplink serving cell in a plurality of uplink serving cells respectively configured with PUCCH resources, where the target uplink serving cell is one of the plurality of uplink serving cells; and sending a PUCCH on the target uplink serving cell.

## Description

### CROSS-REFERENCE TO RELATED APPLICATIONS

This application claims priority to Chinese Patent Application No. 201910780288.1 filed on August 22, 2019, the contents of which are incorporated in their entirety by reference herein.

### TECHNICAL FIELD

The present disclosure relates to the field of communications technologies, and in particular, to a physical uplink control channel (PUCCH) transmission method, a user equipment (UE), and a network device.

### BACKGROUND

Currently, in the Long Term Evolution (LTE) standardization process, to meet the continuously increasing service requirements and increase the system bandwidth, a carrier aggregation (CA) technology is introduced, which enables the system to aggregate a maximum of five component carriers (CCs) having the same frame structure, that is, support a maximal bandwidth of 100 MHz. As the communication service requirements continuously increase and the system requires a larger bandwidth and aggregation of more component carriers, an enhanced carrier aggregation (eCA) technology is introduced, to support aggregation of up to 32 CCs.

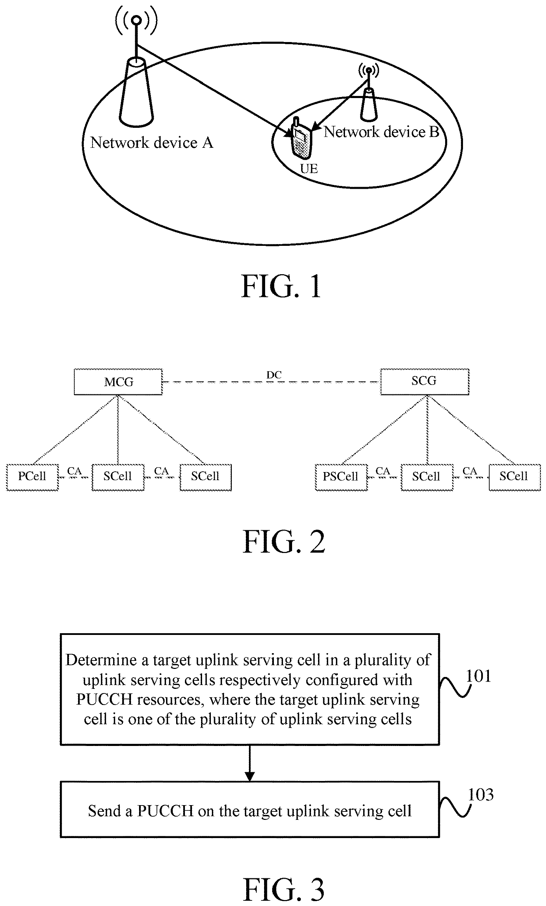

Additionally, to ensure the coverage of users at the edge of the serving cell, a dual-connectivity (DC) technology is further introduced, that is, a UE keeps connected to two network devices simultaneously. As shown in FIG. 1, when a UE is located at the edge of a serving cell, the signal strength of the UE may be insufficient if relying only on a network device A. Therefore, a network device B may be deployed at the edge of the serving cell, and the network device A and the network device B are configured in DC, to enhance coverage. In this way, the UE can simultaneously keep connected to the network device A and the network device B. The DC technology is different from the CA technology in that the two network devices in DC are independently scheduled, that is, the UE needs to be configured with two different Media Access Control (MAC) entities, respectively corresponding to the network device A and the network device B; while all CCs in CA correspond to a same MAC entity.

Further, with the continuous advance in technologies, supporting of simultaneous transmission of more than one PUCCH needs to be considered for introduction of new functions. In the DC technology, it is proposed to support simultaneous transmission of two PUCCHs to feed, back to a secondary network device, a PUCCH of a serving cell group thereof. For eCA, if uplink control information (UCI) of 32 carriers is all transmitted on one PUCCH, huge PUCCH resources are occupied, which is adverse to flexible scheduling. Therefore, to balance the load, simultaneous transmission of two PUCCHs is also introduced in the eCA technology.

In New Radio (NR) mobile communication systems, unlicensed bands may be used as a supplement to licensed bands to help operators expand their service capacity. To keep consistent with NR deployment and maximize NR-based unlicensed access, unlicensed bands such as 5 GHz, 37 GHz, and 60 GHz may be used. Large bandwidths of the unlicensed bands can reduce the implementation complexity of the network devices and the UE. The unlicensed bands are shared by a plurality of wireless access technologies such as Wireless-Fidelity (Wi-Fi), radar, and LTE licensed-assisted access (LAA). Therefore, the use of unlicensed bands needs to comply with certain rules such as Listen Before Talk (LBT) and Maximum Channel Occupancy Time (MCOT), to ensure that all devices can fairly use the resources.

However, when a special cell (SpCell) or a PUCCH-secondary cell (SCell) is configured on an unlicensed band, where the SpCell includes a primary cell (PCell) in a master cell group and a primary secondary cell (PSCell) in a secondary cell group, the UE, before transmitting a PUCCH, needs to perform Listen Before Talk (LBT) to detect the state of the channel. When detecting that the channel is busy, the UE cannot send the PUCCH, which greatly affects sending of UCI of a PUCCH group corresponding to the SpCell or PUCCH-SCell and degrades performance of the communication system.

### SUMMARY

An objective of embodiments of the present disclosure is to provide a PUCCH transmission method, a UE, and a network device, to enable the UE to send a PUCCH in time, thereby improving reliability of transmitting UCI and improving system performance of a communication system.

According to a first aspect, an embodiment of the present disclosure provides a PUCCH transmission method, applicable to a UE, where the method includes:
determining a target uplink serving cell in a plurality of uplink serving cells respectively configured with PUCCH resources, where the target uplink serving cell is one of the plurality of uplink serving cells; and
sending a PUCCH on the target uplink serving cell.

According to a second aspect, an embodiment of the present disclosure provides a UE, including:
a determining module, configured to determine a target uplink serving cell in a plurality of uplink serving cells respectively configured with PUCCH resources, where the target uplink serving cell is one of the plurality of uplink serving cells; and
a sending module, configured to send a PUCCH on the target uplink serving cell.

According to a third aspect, an embodiment of the present disclosure provides a UE, including a memory, a processor, and a computer program stored in the memory and executable by the processor, where the computer program, when executed by the processor, implements steps of the method according to the first aspect.

According to a fourth aspect, an embodiment of the present disclosure provides a computer-readable storage medium, storing a computer program, where the computer program, when executed by a processor, implements steps of the method according to the first aspect.

According to a fifth aspect, an embodiment of the present disclosure provides a PUCCH transmission method, applicable to a network device, where the method includes:
configuring PUCCH resources on a plurality of uplink serving cells respectively; and
receiving a PUCCH on a target uplink serving cell, where the target uplink serving cell is an uplink serving cell determined by a UE in the plurality of uplink serving cells.

According to a sixth aspect, an embodiment of the present disclosure provides a network device, including:
a configuration module, configured to configure PUCCH resources on a plurality of uplink serving cells respectively; and
a receiving module, configured to receive a PUCCH on a target uplink serving cell, where the target uplink serving cell is an uplink serving cell determined by a UE in the plurality of uplink serving cells.

According to a seventh aspect, an embodiment of the present disclosure provides a network device, including a memory, a processor, and a computer program stored in the memory and executable by the processor, where the computer program, when executed by the processor, implements steps of the method according to the fifth aspect.

According to an eighth aspect, an embodiment of the present disclosure provides a computer-readable storage medium, storing a computer program, where the computer program, when executed by a processor, implements steps of the method according to the fifth aspect.

In the embodiments of the present disclosure, by configuring a PUCCH resource for each of a plurality of uplink serving cells, a network device can determine, according to actual specific requirements, a target uplink serving cell in the plurality of uplink serving cells configured with PUCCH resources respectively. In this way, a UE may effectively send a PUCCH in time on the target uplink serving cell, thereby improving reliability of transmitting UCI and improving system performance of a communication system.

### BRIEF DESCRIPTION OF THE DRAWINGS

The accompanying drawings described herein are used to provide further understanding of the present disclosure and construct a part of the present disclosure. Exemplary embodiments of the present disclosure and descriptions thereof are used to explain the present disclosure, and do not constitute an improper limitation to the present disclosure. In the accompanying drawings:
FIG. 1 is a schematic diagram of a dual-connectivity scenario in the related art;
FIG. 2 is a schematic diagram of a dual-connectivity and carrier aggregation scenario in the related art;
FIG. 3 is a schematic flowchart of an embodiment of a PUCCH transmission method according to a first aspect of the present disclosure;
FIG. 4 is a schematic diagram of switching between serving cells according to switching indication signaling according to an embodiment of the present disclosure;
FIG. 5 is a schematic diagram of a correspondence between a downlink carrier and an uplink serving cell according to an embodiment of the present disclosure;
FIG. 6 is a schematic diagram of another correspondence between a downlink carrier and an uplink serving cell according to an embodiment of the present disclosure;
FIG. 7 is a schematic diagram of still another correspondence between a downlink carrier and an uplink serving cell according to an embodiment of the present disclosure;
FIG. 8 is a schematic flowchart of an embodiment of a PUCCH transmission method according to a fifth aspect of the present disclosure;
FIG. 9 is a schematic structural diagram of an embodiment of a UE according to a second aspect of the present disclosure;
FIG. 10 is a schematic structural diagram of an embodiment of a network device according to a sixth aspect of the present disclosure;
FIG. 11 is a schematic structural diagram of an embodiment of a UE according to a third aspect of the present disclosure; and
FIG. 12 is a schematic structural diagram of an embodiment of a network device according to a seventh aspect of the present disclosure.

### DETAILED DESCRIPTION

The following clearly and completely describes the embodiments of the present disclosure with reference to the accompanying drawings in the embodiments of the present disclosure. Apparently, the described embodiments are some of the embodiments of the present disclosure rather than all of the embodiments. All other embodiments obtained by a person of ordinary skill in the art based on the embodiments of the present disclosure without creative efforts shall fall within the protection scope of the present disclosure.

The present disclosure is applicable to various communication systems such as a Global System for Mobile communications (GSM) system, a Code Division Multiple Access (CDMA) system, a Wideband Code Division Multiple Access (WCDMA) system, a General Packet Radio Service (GPRS) system, a Long Term Evolution (LTE)/Long Term Evolution Advanced (LTE-A) system, and a New Radio (NR) system.

A user terminal (User Equipment, UE), which may be also referred to as a mobile terminal, a mobile UE, and the like, and may communicate with one or more core networks through a radio access network (RAN). The UE may be a mobile terminal, such as a mobile phone (or referred to as a "cellular" phone) or a computer with a mobile terminal. For example, the UE may be a portable, pocket-sized, handheld, computer built-in, or in-vehicle mobile apparatus, which exchanges voice and/or data with the RAN.

A base station may be a base transceiver station (BTS) in GSM or CDMA, or may be a Node B in WCDMA, or may be an evolved Node B (eNB or e-NodeB) in LTE or a 5G next-generation Node B (gNB), and is not limited in the present disclosure. However, for ease of description, the following embodiments are described by using the gNB as an example.

For supporting of simultaneous transmission of two PUCCHs in a dual-connectivity (DC) and enhanced carrier aggregation (eCA) scenario stated in the background technology, there is specifically the following rule:
Serving cells in a PUCCH group correspond to a same PUCCH resource, and the PUCCH group may specifically include a primary PUCCH group and a secondary PUCCH group, or a master cell group (MCG) and a secondary cell group (SCG) shown in FIG. 2.

In an eCA scenario, PUCCH resources of the primary PUCCH group are configured on a PCell, to transmit uplink control signaling of serving cells in the primary PUCCH group; and PUCCH resources of the secondary PUCCH group are configured on a SCell (that is, PUCCH SCell), to transmit uplink control signaling of serving cells in the secondary PUCCH group. Which downlink serving cells and which uplink serving cells are included in the primary PUCCH group or the secondary PUCCH group are both configured by a network side through higher layer signaling.

In a DC scenario, PUCCH resources of the MCG are configured on the PCell, to transmit uplink control signaling of serving cells in the MCG, and PUCCH resources of the SCG are configured on the PSCell, to transmit uplink control signaling of serving cells in the SCG. Which downlink serving cells and which uplink serving cells are included in the MCG or SCG are both configured by a network side through higher layer signaling.

Given that a dual-connectivity function may be simultaneously configured for UEs, a configuration of transmitting a plurality of PUCCHs should be preferentially used for dual-connectivity, and when the dual-connectivity is not configured, an additional PUCCH may be configured for a secondary cell in eCA. When the PUCCH is configured for the secondary cell, a mapping relationship between each serving cell and the primary PUCCH group or secondary PUCCH group is configured through Radio Resource Control (RRC) signaling, that is, whether an acknowledgement (ACK)/negative acknowledgement (NACK) message and a channel state information (CSI) report are transmitted by using the PCell or the PUCCH SCell for each serving cell.

The network device may configure the PUCCH SCell through activation and deactivation, and when the PUCCH SCell is deactivated, secondary cells in the secondary PUCCH group cannot be activated.

In the embodiments of the present disclosure, it is proposed to resolve the problem that a UE cannot send a PUCCH when an idle channel detection result is busy, which affects sending of UCI in a PUCCH group and degrades performance of a communication system. The embodiments of the present disclosure are described below in detail with reference to the accompanying drawings.

FIG. 3 is a schematic flowchart of an embodiment of a PUCCH transmission method according to a first aspect of the present disclosure. The method may be performed by an electronic device, for example, a UE. In other words, the method may be performed by software or hardware installed on the UE. As shown in FIG. 3, the method may include the following steps.

Step 101: Determine a target uplink serving cell in a plurality of uplink serving cells respectively configured with PUCCH resources, where the target uplink serving cell is one of the plurality of uplink serving cells.

Step 103: Send a PUCCH on the target uplink serving cell.

In this embodiment of the present disclosure, by configuring a PUCCH resource for each of a plurality of uplink serving cells, a network device can determine, according to actual specific requirements, a target uplink serving cell in the plurality of uplink serving cells configured with PUCCH resources respectively. In this way, a UE may effectively send a PUCCH in time on the target uplink serving cell, thereby improving reliability of transmitting UCI and improving system performance of a communication system.

Step 101 may be performed as different specific embodiments, to diversify manners of determining the target uplink serving cell.

### Specific embodiment 1

In the specific embodiment 1, step 101 may be specifically performed as the following content:
receiving switching indication signaling sent by a network device; and
determining the target uplink serving cell in the plurality of uplink serving cells according to the switching indication signaling.

It may be understood that, the UE may determine, according to a specific switching indication of the network device, a target serving cell that can effectively send a PUCCH in time in a plurality of uplink serving cells respectively configured with PUCCH resources. That is to say, the UE may perform, according to switching indication signaling from the network device, dynamic switching between different uplink serving cells configured with PUCCH resources to determine a target serving cell.

In an example, step 103 may be specifically performed as the following content:
sending the PUCCH on the target uplink serving cell after a preset time starting from an end moment of receiving the switching indication signaling.

It may be understood that, given that the UE requires time to switch between uplink serving cells sending a PUCCH, to ensure that there is a sufficient time to complete the switching between the uplink serving cells on which the PUCCHs are located and that the serving cells on which the PUCCHs are transmitted are consistently understood on both a network side and a terminal side, an effective time of the switching indication signaling needs to be standardized, that is, the UE may begin to send a PUCCH on a target uplink serving cell after a preset time starting from an end moment of receiving the switching indication signaling, for example, a preset quantity of symbols or slots. The preset time may be defined by a specific quantity of slots or Orthogonal Frequency Division Multiplexing (OFDM) symbols, and a value of the quantity may be a value configured by the network device for the UE through RRC signaling, or may be a value stipulated by a protocol, or may be a value related to a processing capability of the UE.

In an example, the solution of receiving switching indication signaling sent by a network device may be specifically performed as the following content:
receiving the switching indication signaling through one of UE-specific downlink control information (DCI), group common DCI, or cell-specific DCI.

In an example, the plurality of uplink serving cells respectively configured with the PUCCH resources may be allocated to different PUCCH groups. In this way, dynamic switching between uplink serving cells sending a PUCCH (that is, uplink serving cells on which PUCCHs are located) may be implemented between different PUCCH groups according to the switching indication signaling sent by the network device.

In an example, in a case that the plurality of uplink serving cells include a first uplink serving cell in a first PUCCH group and a second uplink serving cell in a second PUCCH group, the solution of determining the target uplink serving cell in the plurality of uplink serving cells according to the switching indication signaling may be specifically performed as the following content:
switching from the first uplink serving cell currently used for sending the PUCCH to the second uplink serving cell according to the switching indication signaling, where a PUCCH resource of the first uplink serving cell and a PUCCH resource of the second uplink serving cell are in an active state; and
determining the second uplink serving cell as the target uplink serving cell.

It may be understood that, for example, when a result of performing idle channel state detection on the first uplink serving cell currently used for sending a PUCCH is that the channel is busy, the UE cannot send a PUCCH on the first uplink serving cell. If the network device cannot receive a corresponding PUCCH in a specific time, the network device may send switching indication signaling to the UE, and then the UE may switch, according to the switching indication signaling sent by the network device, from the first uplink serving cell to the second uplink serving cell whose PUCCH resource is in an active state in the second PUCCH group, thereby improving PUCCH sending efficiency by directly switching to the uplink serving cell whose PUCCH resource is in the active state while implementing effective switching between uplink serving cells sending a PUCCH.

In addition to the first uplink serving cell, the first PUCCH group may further include one or more of a plurality of uplink serving cells; and in addition to the second uplink serving cell, the second PUCCH group may further include one or more of a plurality of uplink serving cells.

In an example, when the first PUCCH group includes a primary PUCCH group in the CA mode, the second PUCCH group may include a secondary PUCCH group in the CA mode, and vice versa; or when the first PUCCH group includes a master cell group in the DC mode, the second PUCCH group may include a secondary cell group in the DC mode, and vice versa.

In an example, in each of the first PUCCH group and the second PUCCH group, a PUCCH resource is configured on one uplink serving cell; or in each PUCCH group, a PUCCH resource corresponding to one uplink serving cell is in an active state or available state at a same time. That is to say, each PUCCH group includes at least one uplink serving cell configured with a PUCCH resource.

In an example, after the determining a target uplink serving cell, the PUCCH transmission method may further include the following content:
sending, on the target uplink serving cell, first UCI corresponding to each downlink serving cell corresponding to the first PUCCH group and second UCI corresponding to each downlink serving cell corresponding to the second PUCCH group.

It may be understood that, UCI corresponding to each of downlink serving cells corresponding to different PUCCH groups is sent on the target uplink serving cell, where the UCI may include hybrid automatic repeat request acknowledgement (HARQ-ACK) feedback information or a CSI report.

In an example, in a case that the first UCI includes first HARQ-ACK feedback information and the second UCI includes second HARQ-ACK feedback information, the solution of sending, on the target uplink serving cell, first UCI corresponding to each downlink serving cell corresponding to the first PUCCH group and second UCI corresponding to each downlink serving cell corresponding to the second PUCCH group may be specifically performed as one of the following content:
(1) Send, on the target uplink serving cell, the first HARQ-ACK feedback information by using a first HARQ-ACK codebook constructed in the first PUCCH group, and the second HARQ-ACK feedback information by using a second HARQ-ACK codebook constructed in the second PUCCH group. That is to say, according to a manner of constructing a HARQ-ACK codebook used before switching between uplink serving cells used for sending a PUCCH (that is, the uplink serving cells on which the PUCCH is located), HARQ-ACK codebooks are constructed in respective PUCCH groups.
(2) Send, on the target uplink serving cell, the first HARQ-ACK feedback information and the second HARQ-ACK feedback information by using a third HARQ-ACK codebook constructed in a PUCCH combined group formed by the first PUCCH group and the second PUCCH group. That is to say, a HARQ-ACK codebook may be constructed according to a manner of constructing a HARQ-ACK codebook corresponding to a combination of different PUCCH groups.

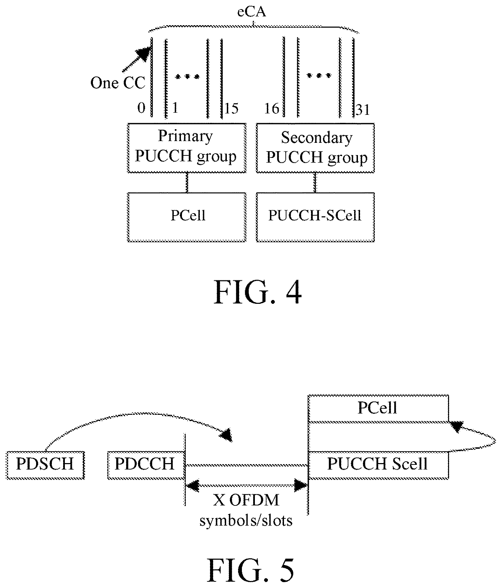

For example, referring to FIG. 4, the network device may configure 32 CCs in downlink (that is, 32 downlink serving cells) for the UE through RRC signaling, where CC 0 to CC 15 are mapped to a primary PUCCH group, whose PUCCH resources are configured on a PCell, and the PCell is located on a licensed band; and CC 16 to CC 31 are mapped to a secondary PUCCH group, whose PUCCH resources are configured on a SCell (that is, PUCCH SCell), and the PUCCH SCell is located on an unlicensed band.

Therefore, for a physical downlink shared channel (PDSCH) scheduled on the downlink serving cells CC 16 to CC 31 or CSI measurement, the UE needs to feed back HARQ-ACK or CSI on the PUCCH SCell. Because the PUCCH SCell is located on an unlicensed band, the UE needs to perform idle channel detection before sending the HARQ-ACK PUCCH or CSI PUCCH. Only when it is detected that the channel is idle, the UE can send the HARQ-ACK PUCCH or CSI PUCCH; otherwise, if the channel is busy, the UE cannot send the HARQ-ACK PUCCH or CSI PUCCH. If the UE always detects in a relatively long period of time that the channel is busy and cannot preempt the channel, the HARQ-ACK and CSI feedback corresponding to the downlink serving cells CC 16 to CC 31 corresponding to the secondary PUCCH group cannot be fed back to the network device, to further bring an adverse effect to downlink scheduling and channel measurement of the network device.

In this case, the network device may send switching indication signaling to the UE, to instruct the UE to send UCI corresponding to the downlink serving cells CC 16 to CC 31 corresponding to the secondary PUCCH group on an uplink serving cell of the primary PUCCH group, that is, on the PCell. The PCell is located on a licensed band. Therefore, provided that there is a PUCCH resource, the UE may send the UCI, to ensure normal sending of the UCI corresponding to the downlink serving cells CC 16 to CC 31, and facilitate an improvement in effectiveness and downlink throughput of the system.

Further, given that the UE requires time to switch between uplink serving cells used for sending a PUCCH, only after a specific time after receiving a physical downlink control channel (PDCCH) command (that is, switching indication signaling) indicating switching, the UE switches to another uplink serving cell to send a PUCCH, where the specific time may be X OFDM symbols/slots, as shown in FIG. 5. A value of X may be configured by RRC signaling or stipulated by a protocol or be related to a processing capability of the UE. That is, after the X OFDM symbols/slots after the UE receives the command, the UE receives the PDSCH scheduled on the CC 16 to CC 31/PDCCH for releasing a semi-persistent scheduling (SPS) PDSCH, and the UE feeds back a corresponding HARQ-ACK feedback on the PCell. If a HARQ-ACK feedback of the PDSCH scheduled on the CC 16 to CC 31/PDCCH for releasing the SPS PDSCH received by the UE before the PDCCH indicating switching is fed back after the scheduled PDCCH of the switching indication signaling, and a time interval is less than X OFDM symbols/slots, the UE may not send the HARQ-ACK.

For a HARQ-ACK feedback corresponding to the PDSCH scheduled on the CC 16 to CC 31/PDCCH for releasing the SPS PDSCH received by the UE after X OFDM symbols/slot after the UE receives the command, the UE feeds back the HARQ-ACK feedback on the PCell. Alternatively, if time of a HARQ-ACK feedback corresponding to the PDSCH scheduled on the CC 16 to CC 31/PDCCH for releasing the SPS PDSCH received by the UE is after X OFDM symbols/slots after the switching command, the UE feeds back the corresponding HARQ-ACK feedback on the PCell. When the UE feeds back the HARQ-ACK, the UE needs to feed back the PDSCH scheduled on the CC 16 to CC 31/PDCCH for releasing the SPS PDSCH, and also needs to feed back the PDSCH scheduled on the CC 0 to CC 15/PDCCH for releasing the SPS PDSCH. For construction of HARQ-ACK codebooks when the UE feeds back the HARQ-ACK, the UE may respectively construct HARQ-ACK codebooks for CC 0 to CC 15 and CC 16 to CC 31 according to the manner before the switching. That is, a HARQ-ACK codebook is constructed for CC 0 to CC 15, a HARQ-ACK codebook is constructed for CC 16 to CC 31, and constructions of the two codebooks do not affect each other. Alternatively, the UE constructs a HARQ-ACK codebook according to a manner in which CC 0 to CC 31 are in a PUCCH group.

It should be noted that, the "sending the PUCCH on the target uplink serving cell according to the switching indication signaling after a preset time starting from an end moment of receiving the switching indication signaling" means that the terminal side may send the PUCCH on the target uplink serving cell after the preset time starting from the end moment of receiving the switching indication signaling, but does not mean that the UE definitely sends the PUCCH at a moment after the preset time starting from the end moment of receiving the switching indication signaling, and a specific time at which the UE sends the PUCCH depends on scheduling or configuration of the network side.

In an example, at least two uplink serving cells of the plurality of uplink serving cells respectively configured with the PUCCH resources may be allocated to a same PUCCH group. In this way, dynamic switching between uplink serving cells sending a PUCCH may be implemented in the same PUCCH group according to the switching indication signaling sent by the network device.

In an example, in a case that the plurality of uplink serving cells include a third uplink serving cell and a fourth uplink serving cell in a target PUCCH group, that is to say, the target PUCCH group includes at least two uplink serving cells configured with PUCCH resources, the solution of determining the target uplink serving cell in the plurality of uplink serving cells according to the switching indication signaling may be specifically performed as the following content:
switching from the third uplink serving cell currently used for sending the PUCCH to the fourth uplink serving cell according to the switching indication signaling; and
determining the fourth uplink serving cell as the target uplink serving cell.

The target PUCCH group is one of at least one pre-configured PUCCH group, and a PUCCH resource corresponding to only one uplink serving cell in the target PUCCH group is in an active state at a same time.

It may be understood that, in a PUCCH group, the network device respectively configures PUCCH resources on a plurality of uplink serving cells, but at a same time, a PUCCH resource of only one uplink serving cell is in the active/available state. In an example, when a result of performing idle channel state detection on the third uplink serving cell currently used for sending a PUCCH is that the channel is busy, the UE cannot send a PUCCH on the third uplink serving cell. If the network side cannot receive a corresponding PUCCH in a specific time, the network device may send switching indication signaling to the UE, and the UE may switch, according to the switching indication signaling, from the third uplink serving cell to the fourth uplink serving cell in the target PUCCH group, and cause the PUCCH resource corresponding to the fourth uplink serving cell to enter the active state/available state, to implement effective switching between uplink serving cells sending a PUCCH.

In an example, the target PUCCH group may include a primary PUCCH group or secondary PUCCH group in the CA mode.

In an example, the target PUCCH group may further include a master cell group or secondary cell group in the DC mode.

In an example, after the determining a target uplink serving cell, the method may further include the following content:
sending, on the target uplink serving cell, third UCI corresponding to each downlink serving cell corresponding to the target PUCCH group.

It may be understood that, UCI corresponding to each downlink serving cell corresponding to the target PUCCH group is sent on the target uplink serving cell, where the third UCI may include HARQ-ACK feedback information or a CSI report.

In an example, in a case that the third UCI includes third HARQ-ACK feedback information, the solution of sending, on the target uplink serving cell, third UCI corresponding to each downlink serving cell corresponding to the target PUCCH group may be specifically performed as the following content:
sending, on the target uplink serving cell, the third HARQ-ACK feedback information by using a third HARQ-ACK codebook constructed in the target PUCCH group. That is to say, according to a manner of constructing a HARQ-ACK codebook used before switching between uplink serving cells used for sending a PUCCH, HARQ-ACK codebooks may continue to be constructed.

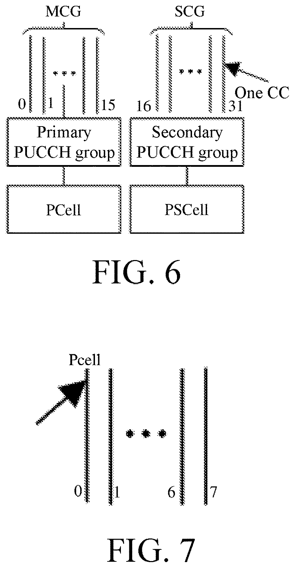

For example, as shown in FIG. 6, the DC mode is configured for the UE. One or more uplink serving cells are configured for an MCG in downlink, UCI of the MCG is fed back on a PCell, one or more uplink serving cells are also configured for an SCG in downlink, and UCI of the SCG is fed back on a PSCell. The PCell is located on a licensed band, and the PSCell is located on an unlicensed band. Additionally, a plurality of uplink serving cells such as uplink serving cells 0, 1, 2, 3, and 4 are aggregated in uplink of the SCG, and are all located on an unlicensed band, where the PSCell is the uplink serving cell 0. A HARQ-ACK feedback and a CSI feedback of a PDSCH/PDCCH for releasing an SPS PDSCH scheduled on all downlink serving cells of the SCG need to be both configured on a PUCCH of the PSCell and be fed back. Therefore, when a channel condition of the PSCell is relatively poor (for example, preempted by another access point), and the UE cannot access the channel in a long time, the HARQ-ACK/CSI feedback on the SCG cannot be transmitted. In this case, if channel conditions of other uplink serving cells (for example, the uplink serving cells 1, 2, 3, and 4) aggregated in uplink of the SCG are relatively good (relatively idle), the network device may instruct the UE to switch an uplink serving cell of the SCG used for sending a PUCCH to another uplink serving cell such as the uplink serving cell 1.

For a switching manner, switching is performed only in the SCG. Therefore, the uplink control feedback of the MCG is not affected, while the UCI feedback such as the HARQ-ACK codebook of the SCG is the same as that in the manner before the switching, that is, codebook construction is performed in the SCG.

The switching manner may further include: the network device first configures a PUCCH resource on each of the uplink serving cell 0 and the uplink serving cell 1 through RRC signaling, but initially, a PUCCH resource on only the PSCell, that is, the serving cell 0 is in the active state or available state. Therefore, the UE feeds back the UCI of the SCG on the serving cell 0. After receiving the indication signaling sent by the network device and used for switching an uplink serving cell used for sending a PUCCH, the UE switches an uplink serving cell used for sending a PUCCH to the uplink serving cell 1, and performs transmission according to a resource parameter configured by the RRC signaling (for example, a PUCCH resource set, a CSI PUCCH resource configuration, or a PUCCH transmission power configuration).

It should be noted that, Solutions for implementing switching an uplink serving cell on which a PUCCH is located according to the switching indication signaling sent by the network device are not merely limited to the solution for switching between different PUCCH groups and the solution for switching in a same PUCCH group.

In an example, the switching indication signaling sent by the network device includes a cell index number of the target uplink serving cell. In this way, the UE may efficiently determine, according to the cell index number of the target uplink serving cell, the target uplink serving cell finally used for sending a PUCCH.

As can be learned from the above, the PUCCH transmission method according to this embodiment of the present disclosure is applicable to a case that DC or at least uplink CA is configured for the UE. When an uplink serving cell used for sending a PUCCH is in a relatively poor channel condition, the uplink serving cell used for sending a PUCCH may be dynamically switched, thereby improving reliability of transmitting UCI, and facilitating an improvement in system performance of a communication system.

### Specific embodiment 2

In the specific embodiment 2, step 101 may be specifically performed as the following content:
performing idle channel state detection on each of the plurality of uplink serving cells, and determining at least one candidate uplink serving cell, where the at least one candidate uplink serving cell includes all uplink serving cells whose idle channel state detection results are idle; and
determining the target uplink serving cell in the at least one candidate uplink serving cell.

It may be understood that, when the network device respectively configures PUCCH resources for a plurality of uplink serving cells of the UE, the UE may perform idle channel state detection such as LBT on each of the plurality of uplink serving cells, and use, according to an idle channel state detection result, an uplink serving cell on which a channel is idle as a candidate uplink serving cell used for determining a target uplink serving cell, to effectively send a PUCCH in time.

For example, a plurality of CCs such as eight CCs (CC 0, CC 1, CC 2, ..., and CC 7) shown in FIG. 7 are aggregated in uplink transmission of the UE, and all uplink serving cells belong to an unlicensed band, where an uplink serving cell PCell is on the CC 0. The network device configures PUCCH resources such as the PCell, the CC 1, and the CC 2 on a plurality of uplink serving cells through RRC signaling, and the PUCCH resources configured on all the uplink serving cells are the same. On the UE side, before a PUCCH is transmitted, the UE performs LBT on a channel according to configuration or scheduling of the network device. Preferably, the UE performs LBT on each of the PCell, the CC 1, and the CC 2. If it is detected on the PCell that a channel is idle, the UE sends a PUCCH on the PCell. Otherwise, if it is detected on the PCell that a channel is busy, and the UE detects on at least one uplink serving cell of the CC 1 and the CC 2 that a channel is idle, the UE chooses to send a PUCCH on an uplink serving cell on which a channel is in an idle state. On the network device side, the network device needs to receive the PUCCH on the PCell, the CC 1, and the CC 2 through blind detection, where a serving cell on which the PUCCH is detected is an uplink serving cell sending the PUCCH.

In an example, in a case that there are a plurality of candidate uplink serving cells, the solution of determining the target uplink serving cell in the at least one candidate uplink serving cell may be implemented through one of the following:
determining a candidate uplink serving cell corresponding to a minimum cell index number as the target uplink serving cell;
determining a candidate uplink serving cell corresponding to an optimal channel condition as the target uplink serving cell; or
determining a randomly selected candidate uplink serving cell as the target uplink serving cell.

In an example, in a case that there are a plurality of candidate uplink serving cells, the PUCCH transmission method may further include the following content:
sending a PUCCH on each of the candidate uplink serving cells.

It may be understood that, when two or more of the plurality of uplink serving cells respectively configured with the PUCCH resources are in a good channel condition and may be used for sending a PUCCH, the PUCCH may be sent on each uplink serving cell, thereby repeatedly sending the PUCCH, to improve reliability of sending the PUCCH.

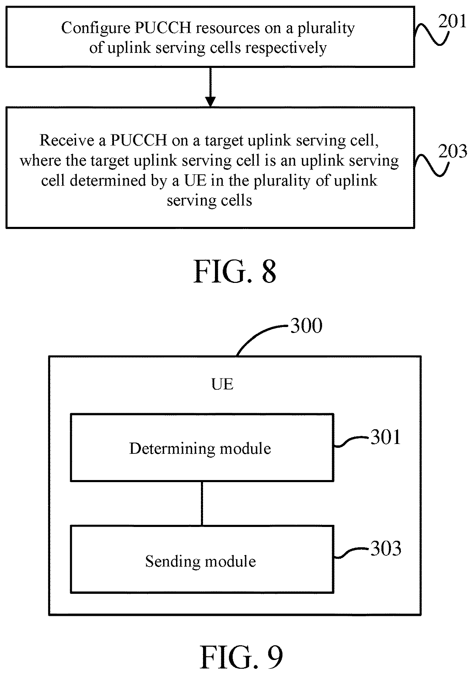

FIG. 8 is a schematic flowchart of an embodiment of a PUCCH transmission method according to a fifth aspect of the present disclosure. The method may be performed by an electronic device, for example, a network device. In other words, the method may be performed by software or hardware installed on the network device. As shown in FIG. 8, the method may include the following steps.

Step 201: Configure PUCCH resources on a plurality of uplink serving cells respectively.

Step 203: Receive a PUCCH on a target uplink serving cell, where the target uplink serving cell is an uplink serving cell determined by a UE in the plurality of uplink serving cells.

In this embodiment of the present disclosure, PUCCH resources are respectively configured for a plurality of uplink serving cells, to enable a UE to determine, according to actual specific requirements, a target uplink serving cell in the plurality of uplink serving cells configured with the PUCCH resources, and then a PUCCH sent by the UE on the target uplink serving cell may be received, thereby effectively receiving UCI in time, improving reliability of transmitting the UCI, and improving system performance of a communication system.

In an example, step 203 may be performed as different specific embodiments, to ensure diversity of efficiently and reliably receiving a PUCCH.

### Specific embodiment 1

In the specific embodiment 1, before step 203, the method may further include the following content:
sending switching indication signaling to the UE, where the switching indication signaling is used for instructing the UE to determine the target uplink serving cell in the plurality of uplink serving cells.

It may be understood that, the network device sends a specific switching indication to the UE, to enable the UE to efficiently and accurately determine, in a plurality of uplink serving cells respectively configured with PUCCH resources, a target serving cell used for effectively sending a PUCCH in time, that is to say, to enable the UE to perform, according to the switching indication signaling, dynamic switching between different uplink serving cells configured with PUCCH resources to determine a target serving cell.

In an example, step 203 may be specifically performed as the following content:
receiving the PUCCH on the target uplink serving cell after a preset time starting from an end moment of completely sending the switching indication signaling to the UE.

It may be understood that, given that the UE requires time to switch between uplink serving cells sending a PUCCH, to ensure that there is a sufficient time to complete the switching between the uplink serving cells on which the PUCCHs are located and that the serving cells on which the PUCCHs are transmitted are consistently understood on both a network side and a terminal side, an effective time of the switching indication signaling needs to be standardized, that is, the network device may begin to receive a PUCCH on a target uplink serving cell after a preset time starting from an end moment of sending the switching indication signaling, for example, a preset quantity of symbols or slots. The preset time may be defined by a specific quantity of slots or OFDM symbols, and a value of the quantity may be a value configured by the network device for the UE through RRC signaling, or may be a value stipulated by a protocol, or may be a value related to a processing capability of the UE.

In an example, the solution of sending the switching indication signaling to the UE may be specifically performed as the following content:
sending the switching indication signaling to the UE through one of UE-specific downlink control information (DCI), group common DCI, or cell-specific DCI.

In an example, the plurality of uplink serving cells respectively configured with the PUCCH resources may be allocated to different PUCCH groups. In this way, the switching indication signaling may be configured to instruct the UE to implement, between different PUCCH groups, dynamic switching between uplink serving cells sending a PUCCH.

In an example, in a case that the plurality of uplink serving cells include a first uplink serving cell in a first PUCCH group and a second uplink serving cell in a second PUCCH group, the switching indication signaling is used for instructing the UE to switch from the first uplink serving cell currently used for sending the PUCCH to the second uplink serving cell, where a PUCCH resource of the first uplink serving cell and a PUCCH resource of the second uplink serving cell are in an active state.

Step 203 may be specifically performed as: receiving the PUCCH on the second uplink serving cell.

It may be understood that, preferably, when the UE determines that a result of performing idle channel state detection on the first uplink serving cell currently used for sending a PUCCH is that the channel is busy, and cannot send a PUCCH on the first uplink serving cell, that is to say, when the network device cannot receive the corresponding PUCCH in a specific time, the network device may send the switching indication signaling to the UE, and then the network device may receive, after the UE switches from the first uplink serving cell to a second uplink serving cell in the second PUCCH group whose PUCCH resource is in an active state, a PUCCH on the second uplink serving cell, that is, a target uplink serving cell. In this way, PUCCH sending efficiency may be improved by directly receiving the PUCCH on the uplink serving cell in the active state after the switching while implementing effective switching between uplink serving cells sending a PUCCH.

In addition to the first uplink serving cell, the first PUCCH group may further include one or more of a plurality of uplink serving cells; and in addition to the second uplink serving cell, the second PUCCH group may further include one or more of a plurality of uplink serving cells.

In an example, when the first PUCCH group includes a primary PUCCH group in the CA mode, the second PUCCH group may include a secondary PUCCH group in the CA mode, and vice versa; or when the first PUCCH group includes a master cell group in the DC mode, the second PUCCH group may include a secondary cell group in the DC mode, and vice versa.

In an example, in the PUCCH transmission method according to this embodiment of the present disclosure, in each of the first PUCCH group and the second PUCCH group, a PUCCH resource is configured on only one uplink serving cell; or in each PUCCH group, a PUCCH resource corresponding to only one uplink serving cell is in an active state or available state at a same time. That is to say, each PUCCH group includes at least one uplink serving cell configured with a PUCCH resource.

In an example, the solution of receiving the PUCCH on the second uplink serving cell may be specifically performed as the following content:
receiving, on the second uplink serving cell, first UCI corresponding to each downlink serving cell corresponding to the first PUCCH group and second UCI corresponding to each downlink serving cell corresponding to the second PUCCH group.

It may be understood that, UCI corresponding to downlink serving cells corresponding to different PUCCH groups is carried through a PUCCH sent on the second uplink serving cell, that is, the target uplink serving cell, where each piece of UCI may include HARQ-ACK feedback information or a CSI report.

In an example, in a case that the first UCI includes first HARQ-ACK feedback information and the second UCI includes second HARQ-ACK feedback information, the receiving, on the second uplink serving cell, first UCI corresponding to each downlink serving cell corresponding to the first PUCCH group and second UCI corresponding to each downlink serving cell corresponding to the second PUCCH group may be specifically performed as one of the following content:
(1) Receive, on the second uplink serving cell, the first HARQ-ACK feedback information sent by the UE by using a first HARQ-ACK codebook constructed in the first PUCCH group, and the second HARQ-ACK feedback information sent by the UE by using a second HARQ-ACK codebook constructed in the second PUCCH group. That is to say, according to a manner of constructing a HARQ-ACK codebook used before switching between uplink serving cells used for sending a PUCCH (that is, the uplink serving cells on which the PUCCH is located), HARQ-ACK codebooks are constructed in respective PUCCH groups.
(2) Receive, on the second uplink serving cell, the first HARQ-ACK feedback information and the second HARQ-ACK feedback information that are sent by the UE by using a third HARQ-ACK codebook constructed in a PUCCH combined group formed by the first PUCCH group and the second PUCCH group. That is to say, a HARQ-ACK codebook may be constructed according to a manner of constructing a HARQ-ACK codebook corresponding to a combination of different PUCCH groups.

In an example, at least two of the plurality of uplink serving cells respectively configured with the PUCCH resources may be allocated to a same PUCCH group. In this way, the switching indication signaling may be configured to instruct the UE to implement, in the same PUCCH group, switching between uplink serving cells sending a PUCCH.

In an example, in a case that the plurality of uplink serving cells include a third uplink serving cell and a fourth uplink serving cell in a target PUCCH group, that is to say, the target PUCCH group includes at least two uplink serving cells configured with PUCCH resources, the switching indication signaling is used for instructing the UE to switch from the third uplink serving cell currently used for sending a PUCCH to the fourth uplink serving cell, the target PUCCH group is one of at least one pre-configured PUCCH group, and a PUCCH resource corresponding to only one uplink serving cell in the target PUCCH group is in an active state at a same time.

Step 203 may be specifically performed as: receiving the PUCCH on the fourth uplink serving cell.

It may be understood that, preferably, after the UE determines that a channel corresponding to the third uplink serving cell currently used for sending a PUCCH is busy, and switches from the third uplink serving cell to a fourth uplink serving cell in the target PUCCH group, the network device receives the PUCCH on the fourth uplink serving cell, that is, the target uplink serving cell. In this way, effective switching between uplink serving cells sending a PUCCH is implemented.

In an example, the target PUCCH group may include a primary PUCCH group or secondary PUCCH group in the CA mode.

In an example, the target PUCCH group may further include a master cell group or secondary cell group in the DC mode.

In an example, the solution of receiving the PUCCH on the fourth uplink serving cell may be specifically performed as the following content:
receiving, on the fourth uplink serving cell, third UCI corresponding to each downlink serving cell corresponding to the target PUCCH group.

It may be understood that, third UCI corresponding to downlink serving cells corresponding to the target PUCCH group is carried through a PUCCH sent on the fourth uplink serving cell, that is, the target uplink serving cell, where the third UCI may include HARQ-ACK feedback information or a CSI report.

In an example, in a case that the third UCI includes third HARQ-ACK feedback information, the solution of receiving, on the fourth uplink serving cell, third UCI corresponding to each downlink serving cell corresponding to the target PUCCH group may be specifically performed as the following content:
receiving, on the fourth uplink serving cell, the third HARQ-ACK feedback information sent by the UE by using the third HARQ-ACK codebook constructed in the target PUCCH group. That is to say, according to a manner of constructing a HARQ-ACK codebook used before switching between uplink serving cells used for sending a PUCCH, HARQ-ACK codebooks may continue to be constructed.

It should be noted that, when the switching indication signaling is used for instructing to implement switching between uplink serving cells on which a PUCCH is located, switching solutions are not limited to the solution for switching between different PUCCH groups and the solution for switching in a same PUCCH group.

In an example, the switching indication signaling includes a cell index number of the target uplink serving cell. In this way, the UE may efficiently determine the target uplink serving cell in the plurality of uplink serving cells according to the cell index number.

### Specific embodiment 2

In the specific embodiment 2, before step 203, the method may further include the following content:
detecting the PUCCH on the plurality of uplink serving cells; and
determining an uplink serving cell of the detected PUCCH as the target uplink serving cell.

It may be understood that, the network device may determine, through blind detection, the target uplink serving cell used for sending a PUCCH by the UE.

In an example, the network device may first perform idle channel state detection on each of a plurality of uplink serving cells respectively configured with PUCCH resources, and use an uplink serving cell whose idle channel state detection result is idle as a candidate uplink serving cell used for determining a target uplink serving cell receiving a PUCCH, to effectively receive the PUCCH in time.

In an example of the PUCCH transmission method according to this embodiment of the present disclosure, in a case that there are a plurality of candidate uplink serving cells, the target uplink serving cell includes one of the following:
a candidate uplink serving cell corresponding to a minimum cell index number;
a candidate uplink serving cell corresponding to an optimal channel condition; or
a randomly selected candidate uplink serving cell by the UE.

It may be understood that, when the target uplink serving cell is a candidate uplink serving cell corresponding to a minimum cell index number or whose channel condition is best, a range within which the network device performs blind detection may be narrowed, and efficiency of determining the target uplink serving cell may be further improved.

In an example, in a case that there are a plurality of candidate uplink serving cells, the PUCCH transmission method may further include the following content:
receiving a PUCCH on each of the candidate uplink serving cells.

It may be understood that, when two or more of the plurality of uplink serving cells respectively configured with the PUCCH resources are in a good channel condition and may be used for receiving a PUCCH, the PUCCH may be received on each uplink serving cell, thereby repeatedly receiving the PUCCH, to improve reliability of transmitting the PUCCH.

FIG. 9 is a schematic structural diagram of an embodiment of a UE according to a second aspect of the present disclosure.

As shown in the figure, the UE 300 includes:
a determining module 301, configured to determine a target uplink serving cell in a plurality of uplink serving cells respectively configured with PUCCH resources, where the target uplink serving cell is one of the plurality of uplink serving cells; and
a sending module 303, configured to send a PUCCH on the target uplink serving cell.

In an example of the UE 300 of the present disclosure, the determining module 301 may be configured to:
receive switching indication signaling sent by a network device; and
determine the target uplink serving cell in the plurality of uplink serving cells according to the switching indication signaling.

In an example, the sending module 303 may be configured to:
send the PUCCH on the target uplink serving cell after a preset time starting from an end moment of receiving the switching indication signaling.

In an example, the plurality of uplink serving cells include a first uplink serving cell in a first PUCCH group and a second uplink serving cell in a second PUCCH group; and
the determining module 301 may be configured to:
switch from the first uplink serving cell currently used for sending the PUCCH to the second uplink serving cell according to the switching indication signaling, where a PUCCH resource of the first uplink serving cell and a PUCCH resource of the second uplink serving cell are in an active state; and
determine the second uplink serving cell as the target uplink serving cell.

In an example, the sending module 303 may be further configured to:
send, on the target uplink serving cell, first UCI corresponding to each downlink serving cell corresponding to the first PUCCH group and second UCI corresponding to each downlink serving cell corresponding to the second PUCCH group.

In an example, the first UCI includes first HARQ-ACK feedback information, and the second UCI includes second HARQ-ACK feedback information; and
the sending module 303 may be configured to:
send, on the target uplink serving cell, the first HARQ-ACK feedback information by using a first HARQ-ACK codebook constructed in the first PUCCH group, and the second HARQ-ACK feedback information by using a second HARQ-ACK codebook constructed in the second PUCCH group; or send, on the target uplink serving cell, the first HARQ-ACK feedback information and the second HARQ-ACK feedback information by using a third HARQ-ACK codebook constructed in a PUCCH combined group formed by the first PUCCH group and the second PUCCH group.

In an example, the plurality of uplink serving cells include a third uplink serving cell and a fourth uplink serving cell in a target PUCCH group, the target PUCCH group is one of at least one pre-configured PUCCH group, and a PUCCH resource corresponding to only one uplink serving cell in the target PUCCH group is in an active state at a same time; and
the determining module 301 may be configured to:
switch from the third uplink serving cell currently used for sending the PUCCH to the fourth uplink serving cell according to the switching indication signaling; and
determine the fourth uplink serving cell as the target uplink serving cell.

In an example, the sending module 303 may be further configured to:
send, on the target uplink serving cell, third UCI corresponding to each downlink serving cell corresponding to the target PUCCH group.

In an example, the switching indication signaling includes a cell index number of the target uplink serving cell.

In an example, a receiving module may be configured to:
receive the switching indication signaling through one of UE-specific downlink control information (DCI), group common DCI, or cell-specific DCI.

In an example, the determining module 301 may be configured to:
perform idle channel state detection on each of the plurality of uplink serving cells, and determining at least one candidate uplink serving cell, where the at least one candidate uplink serving cell includes all uplink serving cells whose idle channel state detection results are idle; and
determine the target uplink serving cell in the at least one candidate uplink serving cell.

In an example, in a case that there are a plurality of candidate uplink serving cells, the determining module 301 may be configured to perform one of the following:
determining a candidate uplink serving cell corresponding to a minimum cell index number as the target uplink serving cell;
determining a candidate uplink serving cell corresponding to an optimal channel condition as the target uplink serving cell; or
determining a randomly selected candidate uplink serving cell as the target uplink serving cell.

It can be understood that the UE 300 provided in this embodiment of the present disclosure can implement the foregoing PUCCH transmission method performed by the UE 300, each related description about the PUCCH transmission method is applicable to the UE 300, and details are not described herein again.

In this embodiment of the present disclosure, by configuring a PUCCH resource for each of a plurality of uplink serving cells, a network device can determine, according to actual specific requirements, a target uplink serving cell in the plurality of uplink serving cells configured with PUCCH resources respectively. In this way, a UE may effectively send a PUCCH in time on the target uplink serving cell, thereby improving reliability of transmitting UCI and improving system performance of a communication system.

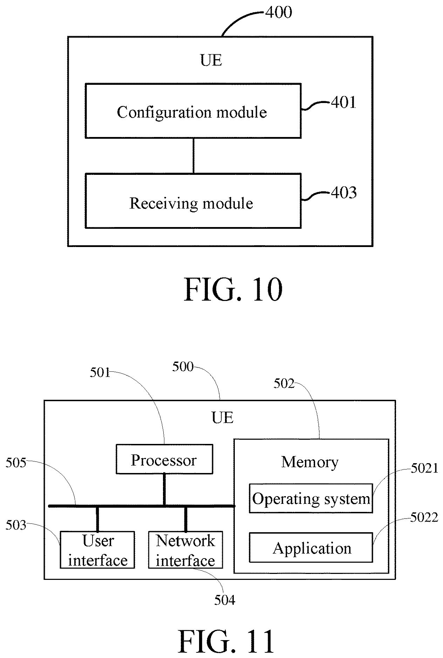

FIG. 10 is a schematic structural diagram of an embodiment of a network device according to a sixth aspect of the present disclosure.

As shown in the figure, the network device 400 includes:
a configuration module 401, configured to configure PUCCH resources on a plurality of uplink serving cells respectively; and
a receiving module 403, configured to receive a PUCCH on a target uplink serving cell, where the target uplink serving cell is an uplink serving cell determined by a UE in the plurality of uplink serving cells.

In an example, the network device 400 may further include:
a sending module, configured to send, before the PUCCH is received on the target uplink serving cell, switching indication signaling to the UE, where the switching indication signaling is used for instructing the UE to determine the target uplink serving cell in the plurality of uplink serving cells.

In an example, the receiving module 403 may be configured to:
receive the PUCCH on the target uplink serving cell after a preset time starting from an end moment of completely sending the switching indication signaling to the UE.

In an example, in a case that the plurality of uplink serving cells include a first uplink serving cell in a first PUCCH group and a second uplink serving cell in a second PUCCH group, the switching indication signaling is used for instructing the UE to switch from the first uplink serving cell currently used for sending the PUCCH to the second uplink serving cell, where a PUCCH resource of the first uplink serving cell and a PUCCH resource of the second uplink serving cell are in an active state.

The receiving module 403 may be configured to:
receive the PUCCH on the second uplink serving cell.

In an example, the receiving module 403 may be configured to:
receive, on the second uplink serving cell, first UCI corresponding to each downlink serving cell corresponding to the first PUCCH group and second UCI corresponding to each downlink serving cell corresponding to the second PUCCH group.

In an example, the first UCI includes first HARQ-ACK feedback information, and the second UCI includes second HARQ-ACK feedback information; and

The receiving module 403 may be configured to:
receive, on the second uplink serving cell, the first HARQ-ACK feedback information sent by the UE by using a first HARQ-ACK codebook constructed in the first PUCCH group, and the second HARQ-ACK feedback information sent by the UE by using a second HARQ-ACK codebook constructed in the second PUCCH group; or
receive, on the second uplink serving cell, the first HARQ-ACK feedback information and the second HARQ-ACK feedback information that are sent by the UE by using a third HARQ-ACK codebook constructed in a PUCCH combined group formed by the first PUCCH group and the second PUCCH group.

In an example, in a case that the plurality of uplink serving cells include a third uplink serving cell and a fourth uplink serving cell in a target PUCCH group, the switching indication signaling is used for instructing the UE to switch from the third uplink serving cell currently used for sending a PUCCH to the fourth uplink serving cell, the target PUCCH group is one of at least one pre-configured PUCCH group, and a PUCCH resource corresponding to only one uplink serving cell in the target PUCCH group is in an active state at a same time.

The receiving module 403 may be configured to:
receive the PUCCH on the fourth uplink serving cell.

In an example, the receiving module 403 may be configured to:
receive, on the fourth uplink serving cell, third UCI corresponding to each downlink serving cell corresponding to the target PUCCH group.

In an example, the switching indication signaling includes a cell index number of the target uplink serving cell.

In an example, the sending module may be configured to:
send the switching indication signaling to the UE through one of UE-specific downlink control information (DCI), group common DCI, or cell-specific DCI.

In an example, the network device 400 may further include:
a detection module, configured to detect the PUCCH on the plurality of uplink serving cells before the PUCCH is received on the target uplink serving cell; and
a determining module, configured to determine an uplink serving cell of the detected PUCCH as the target uplink serving cell.

It can be understood that the network device 400 provided in this embodiment of the present disclosure can implement the foregoing PUCCH transmission method performed by the network device 400, each related description about the PUCCH transmission method is applicable to the network device 400, and details are not described herein again.

In this embodiment of the present disclosure, PUCCH resources are respectively configured for a plurality of uplink serving cells, to enable a UE to determine, according to actual specific requirements, a target uplink serving cell in the plurality of uplink serving cells configured with the PUCCH resources, and then a PUCCH sent by the UE on the target uplink serving cell may be received, thereby effectively receiving UCI in time, improving reliability of transmitting the UCI, and improving system performance of a communication system.

A third aspect of the present disclosure provides a UE, including a memory, a processor, and a computer program stored in the memory and executable by the processor, where the computer program, when executed by the processor, implements steps of any embodiment of the method according to the first aspect.

FIG. 11 is a block diagram of an embodiment of a UE according to a third aspect of the present disclosure. As shown in FIG. 11, the UE 500 includes at least one processor 501, a memory 502, at least one network interface 504, and a user interface 503. All the components in the UE 500 are coupled together by a bus system 505. The bus system 505 may be configured to implement connection and communication between the components. In addition to a data bus, the bus system 505 further includes a power bus, a control bus, and a status signal bus. However, for ease of clear description, all types of buses are marked as the bus system 505 in FIG. 11.

The user interface 503 may include a display, a keyboard, or a pointing device (for example, a mouse, a trackball, a touchpad, or a touchscreen).

The memory 502 in this embodiment of the present disclosure may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), used as an external cache. Through exemplary but not limitative description, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). The memory 502 for the system and the method described in the embodiments of the present disclosure aims to include but not limited to these memories and any other suitable types of memories.

In some implementations, the memory 502 stores the following elements: an executable module or a data structure, or a subset thereof, or an extension set thereof: an operating system 5021 and an application 5022.

The operating system 5021 may include various system programs, for example, a framework layer, a core library layer, a driver layer, and the like, which are used for implementing various basic services and processing a task based on hardware. The application 5022 includes various applications such as a media player, a browser, and the like, used for implementing various application services. A program for implementing the method in the embodiments of the present disclosure may be included in the application 5022.

In the embodiments of the present disclosure, the UE 500 further includes a computer program stored in the memory 502 and executable by the processor 501, where the computer program, when executed by the processor 501, implements the following steps:
determining a target uplink serving cell in a plurality of uplink serving cells respectively configured with PUCCH resources, where the target uplink serving cell is one of the plurality of uplink serving cells; and
sending a PUCCH on the target uplink serving cell.

The method disclosed in the foregoing embodiments of the present disclosure may be applied to the processor 501, or may be implemented by the processor 501. The processor 501 may be an integrated circuit chip having a signal processing capability. During implementation, the steps of the method may be completed through an integrated logic circuit of hardware or an instruction in the form of software in the processor 501. The processor 501 may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor can implement or execute methods, steps, and logical block diagrams disclosed in the embodiments of the present disclosure. The general-purpose processor may be a microprocessor, or the processor may be any conventional processor or the like. The steps of the methods disclosed with reference to the embodiments of the present disclosure may be directly performed and completed by using a hardware decoding processor, or may be performed and completed by using a combination of hardware and software modules in the decoding processor. The software module may be stored in a computer-readable storage medium that is mature in the art, such as a RAM, a flash memory, a ROM, a programmable ROM, an electrically erasable programmable memory, or a register. The computer-readable storage medium is located in the memory 502, and the processor 501 reads information in the memory 502 and completes the steps in the methods in combination with hardware of the processor. Specifically, the computer-readable storage medium stores a computer program, where the computer program, when executed by the processor 501, implements steps of an embodiment of the PUCCH transmission method.

In this embodiment of the present disclosure, by configuring a PUCCH resource for each of a plurality of uplink serving cells, a network device can determine, according to actual specific requirements, a target uplink serving cell in the plurality of uplink serving cells configured with PUCCH resources respectively. In this way, a UE may effectively send a PUCCH in time on the target uplink serving cell, thereby improving reliability of transmitting UCI and improving system performance of a communication system.

The UE 500 can implement each process implemented by the UE in the foregoing embodiments. To avoid repetition, details are not described herein again.

A seventh aspect of the present disclosure provides a network device, including a memory, a processor, and a computer program stored in the memory and executable by the processor, where the computer program, when executed by the processor, implements steps of any embodiment of the method according to the fifth aspect.

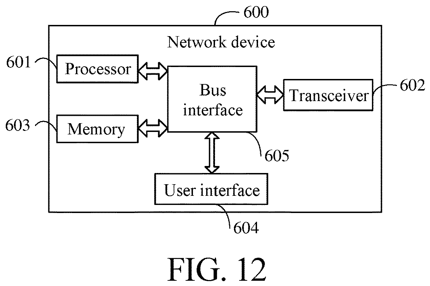

FIG. 12 is a structural diagram of an embodiment of a network device according to a seventh aspect of the present disclosure. The network device 600 can implement operations of any embodiment of the foregoing PUCCH transmission method, and achieve the same effect. As shown in FIG. 12, the network device 600 includes: a processor 601, a transceiver 602, a memory 603, a user interface 604, and a bus interface 605.

The network device 600 further includes a computer program stored in the memory 603 and executable by the processor 601, where the computer program, when executed by the processor 601, implements the following steps:
configuring PUCCH resources on a plurality of uplink serving cells respectively; and
receiving a PUCCH on a target uplink serving cell, where the target uplink serving cell is an uplink serving cell determined by a UE in the plurality of uplink serving cells.

In FIG. 12, a bus architecture may include any quantity of interconnected buses and bridges, which are specifically linked by various circuits of one or more processors represented by the processor 601 and memories represented by the memory 603. The bus architecture may further connect various other circuits such as a peripheral device, a voltage stabilizer, and a power management circuit. These are known in the art, and therefore are not further described in this specification. The bus interface 605 provides an interface. The transceiver 602 may be a plurality of elements, that is, includes a transmitter and a receiver, providing a unit configured to communicate with various other apparatuses on a transmission medium. For different UEs, the user interface 604 may further be an interface capable of externally connecting internally required devices, including but not limited to a keypad, a display, a speaker, a microphone, a joystick, and the like.

The processor 601 is responsible for management of the bus architecture and normal processing, and the memory 603 may store data used when the processor 601 performs an operation.

In this embodiment of the present disclosure, PUCCH resources are respectively configured for a plurality of uplink serving cells, to enable a UE to determine, according to actual specific requirements, a target uplink serving cell in the plurality of uplink serving cells configured with the PUCCH resources, and then a PUCCH sent by the UE on the target uplink serving cell may be received, thereby effectively receiving UCI in time, improving reliability of transmitting the UCI, and improving system performance of a communication system.

The embodiments described above in the present disclosure may be implemented by hardware, software, firmware, middleware, microcode, or a combination thereof. For hardware implementation, the processing unit may be implemented in one or more application-specific integrated circuits (ASIC), digital signal processors (DSP), DSP devices (DSPD), programmable logic devices (PLD), field-programmable gate arrays (FPGA), general-purpose processors, controllers, microcontrollers, microprocessors, other electronic units for performing the functions described in the present disclosure, or a combination thereof.

For software implementation, the techniques described in the embodiments of the present disclosure may be implemented by modules (for example, procedures or functions) that perform the functions described in the embodiments of the present disclosure. Software code may be stored in a memory and executed by a processor. The memory may be implemented inside the processor or outside the processor.

The present disclosure further provides a computer-readable storage medium. The computer-readable storage medium stores a computer program. The computer program, when executed by a processor, implements each process of any embodiment of the PUCCH transmission method according to the first aspect or fifth aspect, and can achieve the same technical effect. To avoid repetition, details are not described herein again. An example of the computer-readable storage medium includes a non-transitory computer-readable storage medium, for example, a read-only memory (ROM), a random access memory (RAM), a magnetic disk, or an optical disc.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses.

It should be further noted that exemplary embodiments mentioned in the present invention describe some methods or systems based on a series of steps or apparatuses. However, the present invention is not limited to an order of steps. That is to say, the steps may be performed in an order mentioned in an embodiment, or may be performed in an order different from the order in the embodiment, or several steps are simultaneously performed.

Through the descriptions of the foregoing implementations, a person skilled in the art may clearly understand that the method according to the foregoing embodiments may be implemented by means of software and a necessary general hardware platform, and certainly, may alternatively be implemented by hardware or software, but in many cases, the former manner is a better implementation. Based on such understanding, the present disclosure or a part thereof that makes a contribution to the prior art may be essentially embodied in a form of a software product. The computer software product is stored in a storage medium (such as a ROM/RAM, a disk, and an optical disk), including several instructions to enable one terminal (which may be a mobile phone, a computer, a server, an air conditioner, a network device, or the like) to perform the methods described in the embodiments of the present disclosure.

The embodiments of this disclosure are described above with reference to the accompanying drawings, but this disclosure is not limited to the foregoing specific implementations. The foregoing specific implementations are only illustrative rather than restrictive. Inspired by this disclosure, a person of ordinary skill in the art can still derive many variations without departing from the essence of this disclosure and the protection scope of the claims. All these variations shall fall within the protection of this disclosure.

## Claims

1. A physical uplink control channel (PUCCH) transmission method, applied to a user equipment (UE), the method comprising:
determining a target uplink serving cell in a plurality of uplink serving cells respectively configured with PUCCH resources, wherein the target uplink serving cell is one of the plurality of uplink serving cells; and
sending a PUCCH on the target uplink serving cell.

2. The method according to claim 1, wherein the determining a target uplink serving cell in a plurality of uplink serving cells respectively configured with PUCCH resources comprises:
receiving switching indication signaling sent by a network device; and
determining the target uplink serving cell in the plurality of uplink serving cells according to the switching indication signaling.

3. The method according to claim 2, wherein the sending a PUCCH on the target uplink serving cell comprises:
sending the PUCCH on the target uplink serving cell after a preset time starting from an end moment of receiving the switching indication signaling.

4. The method according to claim 2 or 3, wherein the plurality of uplink serving cells comprise a first uplink serving cell in a first PUCCH group and a second uplink serving cell in a second PUCCH group; and
the determining the target uplink serving cell in the plurality of uplink serving cells according to the switching indication signaling comprises:
switching from the first uplink serving cell currently used for sending the PUCCH to the second uplink serving cell according to the switching indication signaling, wherein a PUCCH resource of the first uplink serving cell and a PUCCH resource of the second uplink serving cell are in an active state; and
determining the second uplink serving cell as the target uplink serving cell.

5. The method according to claim 4, further comprising:
sending, on the target uplink serving cell, first uplink control information (UCI) corresponding to each downlink serving cell corresponding to the first PUCCH group and second UCI corresponding to each downlink serving cell corresponding to the second PUCCH group.

6. The method according to claim 5, wherein the first UCI comprises first hybrid automatic repeat request acknowledgement (HARQ-ACK) feedback information, and the second UCI comprises second HARQ-ACK feedback information; and
the sending, on the target uplink serving cell, first UCI corresponding to each downlink serving cell corresponding to the first PUCCH group and second UCI corresponding to each downlink serving cell corresponding to the second PUCCH group comprises:
sending, on the target uplink serving cell, the first HARQ-ACK feedback information by using a first HARQ-ACK codebook constructed in the first PUCCH group, and the second HARQ-ACK feedback information by using a second HARQ-ACK codebook constructed in the second PUCCH group; or
sending, on the target uplink serving cell, the first HARQ-ACK feedback information and the second HARQ-ACK feedback information by using a third HARQ-ACK codebook constructed in a PUCCH combined group formed by the first PUCCH group and the second PUCCH group.

7. The method according to claim 2 or 3, wherein the plurality of uplink serving cells comprise a third uplink serving cell and a fourth uplink serving cell in a target PUCCH group, the target PUCCH group is one of at least one pre-configured PUCCH group, and a PUCCH resource corresponding to only one uplink serving cell in the target PUCCH group is in an active state at a same time; and
the determining the target uplink serving cell in the plurality of uplink serving cells according to the switching indication signaling comprises:
switching from the third uplink serving cell currently used for sending the PUCCH to the fourth uplink serving cell according to the switching indication signaling; and
determining the fourth uplink serving cell as the target uplink serving cell.

8. The method according to claim 7, further comprising:
sending, on the target uplink serving cell, third UCI corresponding to each downlink serving cell corresponding to the target PUCCH group.

9. The method according to claim 2, wherein the switching indication signaling comprises a cell index number of the target uplink serving cell.

10. The method according to claim 2, wherein the receiving switching indication signaling sent by a network device comprises:
receiving the switching indication signaling through one of UE-specific downlink control information (DCI), group common DCI, or cell-specific DCI.

11. The method according to claim 1, wherein the determining a target uplink serving cell in a plurality of uplink serving cells respectively configured with PUCCH resources comprises:
performing idle channel state detection on each of the plurality of uplink serving cells, and determining at least one candidate uplink serving cell, wherein the at least one candidate uplink serving cell comprises all uplink serving cells whose idle channel state detection results are idle; and
determining the target uplink serving cell in the at least one candidate uplink serving cell.

12. The method according to claim 11, wherein in a case that there are a plurality of candidate uplink serving cells, the determining the target uplink serving cell in the at least one candidate uplink serving cell comprises one of the following:
determining a candidate uplink serving cell corresponding to a minimum cell index number as the target uplink serving cell;
determining a candidate uplink serving cell corresponding to an optimal channel condition as the target uplink serving cell; or
determining a randomly selected candidate uplink serving cell as the target uplink serving cell.

13. A physical uplink control channel (PUCCH) transmission method, applied to a network device, the method comprising:
configuring PUCCH resources on a plurality of uplink serving cells respectively; and
receiving a PUCCH on a target uplink serving cell, wherein the target uplink serving cell is an uplink serving cell determined by a user equipment (UE) in the plurality of uplink serving cells.

14. The method according to claim 13, wherein before the receiving a PUCCH on a target uplink serving cell, the method further comprises:
sending switching indication signaling to the UE, wherein the switching indication signaling is used for instructing the UE to determine the target uplink serving cell in the plurality of uplink serving cells.

15. The method according to claim 14, wherein the receiving a PUCCH on a target uplink serving cell comprises:
receiving the PUCCH on the target uplink serving cell after a preset time starting from an end moment of completely sending the switching indication signaling to the UE.

16. The method according to claim 14 or 15, wherein in a case that the plurality of uplink serving cells comprise a first uplink serving cell in a first PUCCH group and a second uplink serving cell in a second PUCCH group, the switching indication signaling is used for instructing the UE to switch from the first uplink serving cell currently used for sending the PUCCH to the second uplink serving cell, wherein a PUCCH resource of the first uplink serving cell and a PUCCH resource of the second uplink serving cell are in an active state; and
the receiving a PUCCH on a target uplink serving cell comprises:
receiving the PUCCH on the second uplink serving cell.

17. The method according to claim 16, wherein the receiving the PUCCH on the second uplink serving cell comprises:
receiving, on the second uplink serving cell, first uplink control information (UCI) corresponding to each downlink serving cell corresponding to the first PUCCH group and second UCI corresponding to each downlink serving cell corresponding to the second PUCCH group.

18. The method according to claim 17, wherein the first UCI comprises first hybrid automatic repeat request acknowledgement (HARQ-ACK) feedback information, and the second UCI comprises second HARQ-ACK feedback information; and
the receiving, on the second uplink serving cell, first UCI corresponding to each downlink serving cell corresponding to the first PUCCH group and second UCI corresponding to each downlink serving cell corresponding to the second PUCCH group comprises:
receiving, on the second uplink serving cell, the first HARQ-ACK feedback information sent by the UE by using a first HARQ-ACK codebook constructed in the first PUCCH group, and the second HARQ-ACK feedback information sent by the UE by using a second HARQ-ACK codebook constructed in the second PUCCH group; or
receiving, on the second uplink serving cell, the first HARQ-ACK feedback information and the second HARQ-ACK feedback information that are sent by the UE by using a third HARQ-ACK codebook constructed in a PUCCH combined group formed by the first PUCCH group and the second PUCCH group.

19. The method according to claim 14 or 15, wherein in a case that the plurality of uplink serving cells comprise a third uplink serving cell and a fourth uplink serving cell in a target PUCCH group, the switching indication signaling is used for instructing the UE to switch from the third uplink serving cell currently used for sending a PUCCH to the fourth uplink serving cell, the target PUCCH group is one of at least one pre-configured PUCCH group, and a PUCCH resource corresponding to only one uplink serving cell in the target PUCCH group is in an active state at a same time; and
the receiving a PUCCH on a target uplink serving cell comprises:
receiving the PUCCH on the fourth uplink serving cell.

20. The method according to claim 19, wherein the receiving the PUCCH on the fourth uplink serving cell comprises:
receiving, on the fourth uplink serving cell, third UCI corresponding to each downlink serving cell corresponding to the target PUCCH group.

21. The method according to claim 14, wherein the switching indication signaling comprises a cell index number of the target uplink serving cell.

22. The method according to claim 14, wherein the sending switching indication signaling to the UE comprises:
sending the switching indication signaling to the UE through one of UE-specific downlink control information (DCI), group common DCI, or cell-specific DCI.

23. The method according to claim 13, wherein before the receiving a PUCCH on a target uplink serving cell, the method further comprises:
detecting the PUCCH on the plurality of uplink serving cells; and
determining an uplink serving cell of the detected PUCCH as the target uplink serving cell.

24. A user equipment (UE), comprising:
a determining module, configured to determine a target uplink serving cell in a plurality of uplink serving cells respectively configured with PUCCH resources, wherein the target uplink serving cell is one of the plurality of uplink serving cells; and
a sending module, configured to send a PUCCH on the target uplink serving cell.

25. A network device, comprising:
a configuration module, configured to configure PUCCH resources on a plurality of uplink serving cells respectively; and
a receiving module, configured to receive a PUCCH on a target uplink serving cell, wherein the target uplink serving cell is an uplink serving cell determined by a user equipment (UE) in the plurality of uplink serving cells.

26. A user equipment (UE), comprising a memory, a processor, and a computer program stored in the memory and executable by the processor, wherein the computer program, when executed by the processor, implements steps of the method according to any one of claims 1 to 12.

27. A network device, comprising a memory, a processor, and a computer program stored in the memory and executable by the processor, wherein the computer program, when executed by the processor, implements steps of the method according to any one of claims 13 to 23.

28. A computer-readable storage medium, storing a computer program, wherein the computer program, when executed by a processor, implements steps of the method according to any one of claims 1 to 23.
